# EUROPÄISCHE PATENTSCHRIFT

(11) **EP 3 485 555 B1**
(45) Veröffentlichungstag und Bekanntmachung des Hinweises auf die Patenterteilung: **03.06.2020**
(21) Anmeldenummer: 17743282.0
(22) Anmeldetag: 13.07.2017
(51) Int. Cl.: H02J 7/00

(54) **FAHRZEUGBORDNETZ ZUM LADEN EINES ELEKTRISCH ANGETRIEBENEN FAHRZEUGS UND ENTSPRECHENDES VERFAHREN**
ON-BOARD VEHICLE ELECTRICAL SYSTEM FOR CHARGING AN ELECTRICALLY OPERATED VEHICLE, AND CORESPONDING METHOD
RÉSEAU DE BORD DE VÉHICULE POUR CHARGER UN VÉHICULE À PROPULSION ÉLECTRIQUE ET PROCÉDÉ CORRESPONDANT

(30) Priorität: 18.07.2016 DE 102016213070
(43) Veröffentlichungstag der Anmeldung: 22.05.2019
(73) Patentinhaber: Vitesco Technologies GmbH, 30165 Hannover (DE)
(72) Erfinder: PFEILSCHIFTER, Franz, 93059 Regensburg (DE); BROCKERHOFF, Philip, 93053 Regensburg (DE); BRÜLL, Martin, 93092 Barbing (DE); TÖNS, Matthias, 93049 Regensburg (DE); SCHIRMER, Edmund, 90409 Nürnberg (DE); SCHWEIZER-BERBERICH, Paul-Markus, 10625 Berlin (DE)
(86) Internationale Anmeldenummer: PCT/EP2017/067677
(87) Internationale Veröffentlichungsnummer: WO 2018/015263

(56) Entgegenhaltungen:
- DE-A1-102010 027 719
- US-A1- 2004 108 838

## Beschreibung

Kraftfahrzeuge mit einem elektrischen Antrieb, d.h. Elektrofahrzeuge und Hybridfahrzeuge, umfassen einen elektrischen Energiespeicher zur Versorgung des elektrischen Antriebs. Elektrofahrzeuge und Plug-In-Hybride sind mit einem Anschluss ausgestattet, mittels dem sich mit Gleichspannung und/oder Wechselspannung Energie von einem stationären, elektrischen Versorgungsnetz (lokal oder öffentlich) zum Aufladen des Energiespeichers an diesen übertragen lässt.

DE102015218416 und DE102016209905 gemäß Fig. 4 und Fig. 5 betreffen Fahrzeugbordnetze zum Laden eines Energiespeichers eines Kraftfahrzeugs.

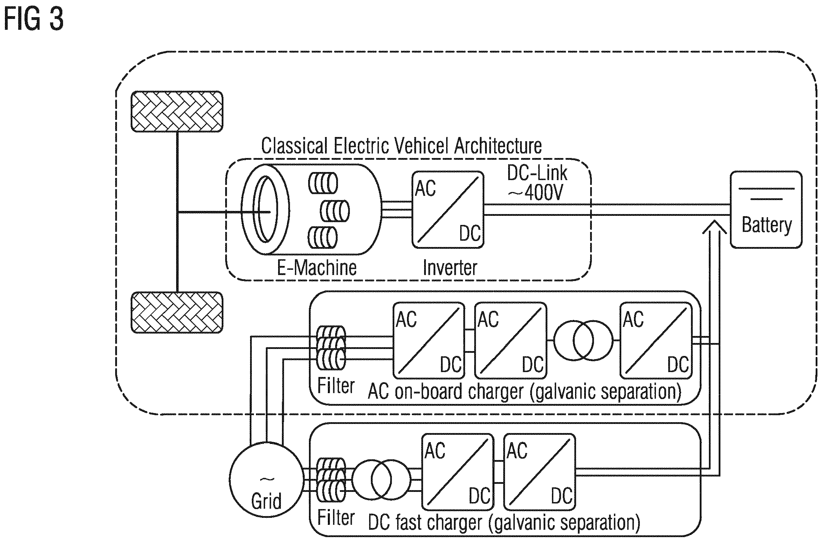

Fig. 3 zeigt eine zumindest intern bekannte Variante des DC-Ladens (DC=Gleichspannung, AC=Wechselspannung) eines Elektrofahrzeugs oder Plug-in-Fahrzeugs.

Es ist eine Aufgabe der Erfindung, ein Fahrzeugbordnetz bzw. Verfahren zum Laden eines elektrischen Energiespeichers zu optimieren. Diese Aufgabe wird jeweils durch die Gegenstände der unabhängigen Ansprüche gelöst. Weitere mögliche Ausgestaltungen der Erfindung ergeben sich aus den abhängigen Ansprüchen sowie aus dieser Beschreibung und den Fig., wobei auch beliebige Kombinationen von Merkmalen eines oder mehrerer der Ausführungsbeispiele miteinander eigenständige Weiterbildungen oder Erfindungen definieren können.

Ein Vorteil von Ausgestaltungen der Erfindung kann darin liegen, die Ladesystemkosten (z.B. Einsparung von Lade-Elektronik, Schalter/Schütze und Leitungssatz) im Fahrzeug und/oder in der Infrastruktur zu reduzieren. Ein Vorteil von Ausgestaltungen der Erfindung kann auch darin liegen, durch die Einsparung einer zweiten Stufe der Ladeelektronik (DC/DC-Wandler) den Aufwand (Kosten, Volumen, Gewicht) weiter zu reduzieren, indem die Spannungslage aller HV-Bordnetzkomponenten (800V: Energiespeicher/Akku, Inverter, Elektro-Motor EM) so gewählt wird, dass diese über dem Niveau der gleichgerichteten Netzwechselspannung liegt. Somit kann gemäß Ausgestaltungen der Erfindung ein AC/DC-Wandler zusammen mit on-Board-Filter- und off-Board-Netz-Induktivitäten neben der Gleichrichtung auch die Spannungsanpassung mit erledigen.

In der Zeichnung zeigt zur Veranschaulichung von einigen möglichen Ausgestaltungen der Erfindung, vereinfachend schematisch:
Fig. 1 ein Fahrzeugbordnetz für ein Kraftfahrzeug oder in einem Kraftfahrzeug, um mit zwei unterschiedlichen Spannungen und/oder nacheinander zunächst einphasig mit AC und dann mehrphasig mit AC oder mit DC einen Energiespeicher zu laden,
Fig. 2 ein weiteres Fahrzeugbordnetz für ein Kraftfahrzeug oder in einem Kraftfahrzeug, um mit zwei unterschiedlichen Spannungen und/oder nacheinander zunächst einphasig mit AC und dann mehrphasig mit AC oder mit DC einen Energiespeicher zu laden, mit einem zusätzlichen Buck-Boost-Converter zum Erhöhen einer Spannung,
Fig. 3 ein zumindest intern bekanntes Laden eines Energiespeichers über ein Fahrzeugbordnetz mit wahlweise Gleichstrom oder Wechselstrom,
Fig. 4 gemäß DE102015218416 Laden eines Energiespeichers über ein Fahrzeugbordnetz mit wahlweise Gleichstrom oder Wechselstrom,
Fig. 5 gemäß DE102016209905 Laden eines Energiespeichers über ein Fahrzeugbordnetz mit wahlweise Gleichstrom oder Wechselstrom,
Fig. 6 einen Ladestecker für ein CAS (combined charging system),

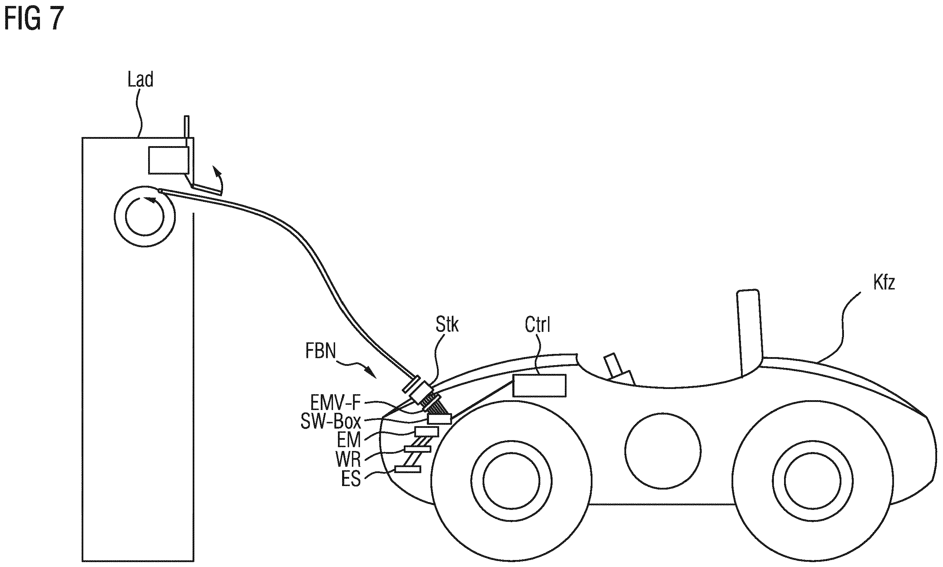

Fig. 7 ein Kraftfahrzeug mit einem Fahrzeugbordnetz.

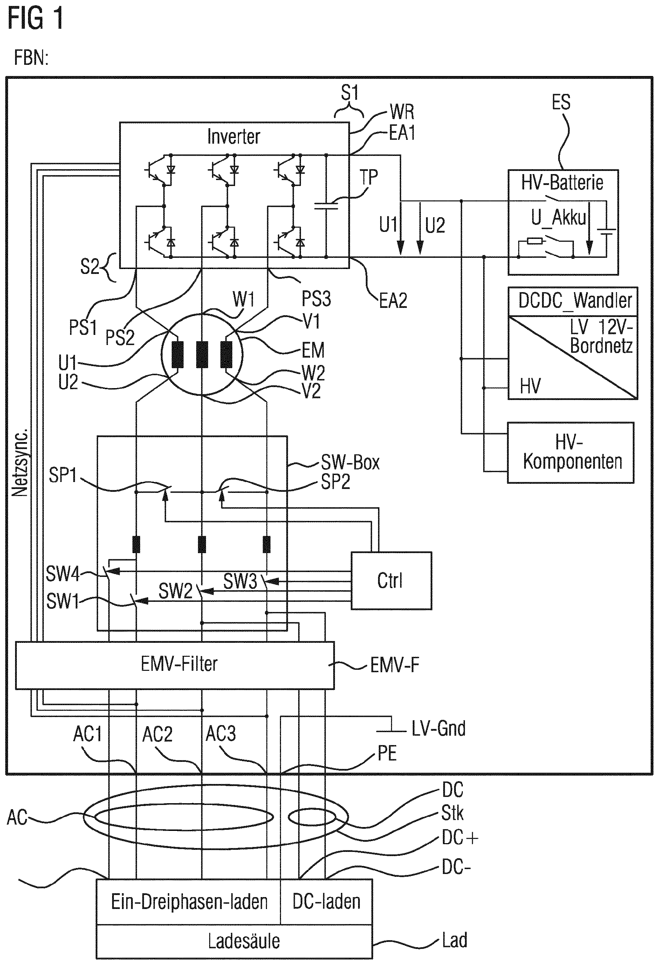

**Fig. 1** zeigt schematisch und vereinfachend als eine Ausgestaltung der Erfindung zum Laden eines Energiespeichers ES (wie z.B. einer Hochvolt-/HV-Batterie eines PlugInHybrid-/Elektro- Kraftfahrzeugs Kfz) ein Fahrzeugbordnetz FBN, das von einer Ladestation Lad über einen Stecker Stk mit wahlweise Gleichstrom DC, einphasigem Wechselstrom AC oder dreiphasigem Wechselstrom (Drehstrom) AC ladbar ist,
wobei z.B. über Schalter SW1, SW2, SW3, SW4; SP1, SP2 einer Schalteinrichtung SW-Box zum Laden mit erst einer ersten Spannung U1 und dann mit einer größeren Spannung U2 die Batteriespannung U_Akku des zu ladenden Energiespeichers ES vor dem Laden mit der höheren Spannung U2 auf einen hinreichenden Wert (z.B. ein Spannungswert oder z.B. x / 80% SOC/stateofcharge/Ladezustand des Lade-Maximums) angehoben wird, insbesondere wenn sie zumindest auf unter einen Schwellwert (z.B. 20% oder 25% SOC / stateofcharge / Ladezustand des Lade-Maximums) entladen ist. Das dargestellte Fahrzeugbordnetz FBN weist einen Stecker Stk (z.B. gemäß Fig. 1 und/oder 6) auf zum Laden des Energiespeichers ES aus einer Ladeeinrichtung Lad (an die der Stecker Stk ansteckbar ist) mit Gleichstrom DC oder (einphasigem) Wechselstrom AC oder (dreiphasigem) Drehstrom AC.

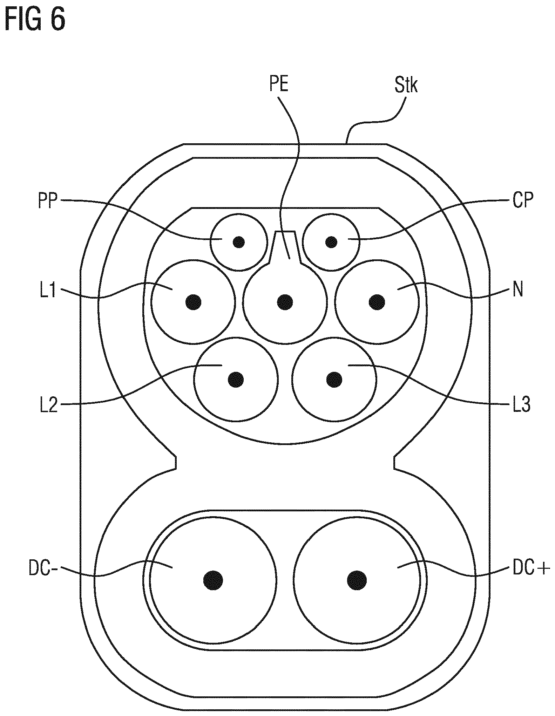

Im Beispiel eines Steckers Stk in Fig. 1, 6 sind z.B. zwei Lade-Eingänge DC+, DC- eines Gleichstrom-Übertragungsanschlusses DC des Fahrzeugbordnetzes FBN zum Laden des Energiespeichers En mit Gleichstrom dargestellt,
sowie Lade-Eingänge AC1, AC2, AC3, N (, LV-Gnd) (=in Fig. 6 bezeichnet als L1, L2, L3, L4, N) eines Wechselstrom-Übertragungsanschlusses AC des Fahrzeugbordnetzes FBN für einphasigen Wechselstrom AC oder dreiphasigen Drehstrom AC, z.B. jeweils für Spannungen z.B. nach einem chinesischen oder europäischen oder deutschen oder japanischen oder amerikanischen Stromnetz-Standard (z.B. EU/China: dreiphasig 400V oder EU/China einphasig 230V oder USA/Japan einphasig 220V),
sowie z.B. ein N-Leiter (oder Nullleiter oder Masse) N, und ggf. Steuerungsanschlüsse und/oder Kommunikationsanschlüsse (P / CP) .

Mit dem Stecker Stk sind, z.B. über ein EMV-Filter EMV-F, mehrere (hier in einer Schaltbox SW-Box und/oder einem Gehäuse oder Modul angeordnete) von einer Steuerung Ctrl gesteuerte Schalteinrichtungen SW1-SW4 (sowie SP1, Sp2) verbunden.

Hier drei Schalteinrichtungen SW1-SW3 sind zum Schalten wahlweise (durch Ctrl) einer oder zweier oder dreier Anschlüsse (z.B. AC1 oder AC2 oder AC3, oder AC1 und AC2 und AC3, oder DC+ und DC-) jeweils auf je einen der Lade-Eingänge U2, V2, W2 einer elektrische Maschine EM vorgesehen (wobei z.B. zwei weitere Schalteinrichtungen SP1, SP2 für eine Sterndreiecksschaltung und/oder zum Umschalten von einem Traktionsbetrieb auf einen Ladebetrieb verwendbar sein können).

Eine Schalteinrichtung SW4 kann zum Schalten eines N-Leiters vorgesehen sein. In Fig. 1 ist die Schalteinrichtung SW4 näher am Stecker Stk als eine und Fig. 1 dargestellte dazu serielle Induktivität geschaltet.

In Fig. 1 ist die Schalteinrichtung SW4 ferner vom Stecker Stk als eine Schalteinrichtung SW1 für eine Phase AC1 geschaltet. In Fig. 1 sind außerdem die Schalteinrichtungen SW2 und SW3 näher am Stecker Stk als eine Induktivität (in Fig. 1 oberhalb jeweils einer Schalteinrichtung SW2, SW3) zwischen diesen und der elektrischen Maschine EM angeordnet. Die Schalteinrichtungen SW2 und SW3 können alternativ aber auch entfernter vom Stecker Stk als eine Induktivität (in Fig. 1 unterhalb jeweils einer dargestellten dazu seriellen Induktivität) oder zwischen der elektrischen Maschine EM und dem Inverter SW angeordnet sein.

Z.B. wird wie unten näher ausgeführt über eine der Wicklungen (U2 oder V2 oder W2) der elektrischen Maschine EM der Energiespeicher ES zunächst mit einphasigem Wechselstrom (aus einem Anschluss AC2 für Wechselstrom oder Drehstrom) oder mit Gleichspannung DC (aus mindestens einem oder beiden der Anschlüsse DC+, DC- für Gleichstrom) mit einer ersten Spannung U1 geladen,
und danach (wenn der Energiespeicher ES hinreichend vorgeladen ist) wird er (ES) mit einer zweiten höheren Spannung U2 (entweder nun mit dreiphasigem Wechselstrom aus AC1 und AC2 und AC3 über U2 und V2 und W2, oder aus mindestens einem der Anschlüsse DC+, DC- für Gleichstrom, über Wicklungen U2, V2, W2 (des Stators und/oder Rotors und/oder mit Mittenabgriff) der elektrischen Maschine EM geladen.

Falls wie dargestellt ein N-Leiter-Anschluss N des Steckers Stk durch einen Schalteinrichtung SW6 schaltbar vorgesehen ist, kann während des Ladens mit der ersten Spannung U1 (mit Gleichspannung oder Wechselspannung) und/oder während des Ladens mit der zweiten Spannung U2 (mit Gleichspannung oder Wechselspannung) dieser N-Leiter-Anschluss N von der Ladestation Lad über den Stecker Stk und eine Schalteinrichtung SW6 an die elektrische Maschine EM und/oder den Inverter WR und/oder den Energiespeicher ES geschaltet sein.

Mit (Ausgängen der Wicklungen) auf einer Seite der elektrischen Maschine EM sind drei Phasenstromanschlüsse PS1, PS2, PS3 auf einer Seite S2 eines Wechselrichters WR der elektrischen Maschine EM verbunden.

Ausgangsanschlüsse EA1, EA2 auf der weiteren Seite S1 des Wechselrichters WR des Energiespeichers ES sind mit Lade-Eingängen des Energiespeichers ES verbunden und legen also an diesen zum Vorladen zunächst eine erste Spannung U1 und (wenn Batteriespannung U_Akku und/oder Ladezustand des Energiespeichers ES einen vorgegebenen Wert erreicht haben) danach zum weiteren Laden des Energiespeichers ES eine (im Vergleich zur ersten Spannung) höhere Spannung U2.

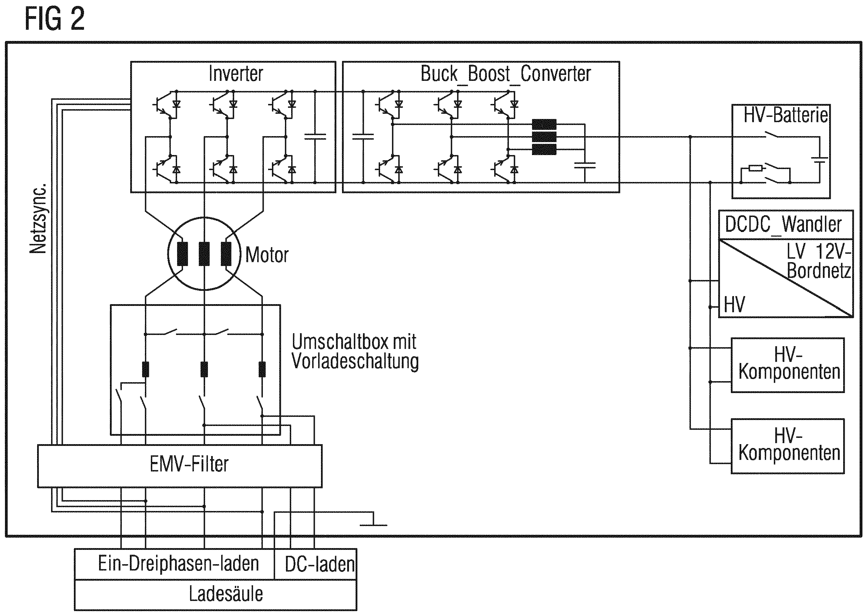

Ein DC-Booster wie der in einer Ausgestaltung der Erfindung in Fig. 2 mit dem Bezugszeichen "Buck_Boost_Converter" bezeichnete sind nach Ausgestaltungen der Erfindung wie in Fig. 1 nicht zwingend erforderlich (aber wären wie z.B. in Fig. 2 als Ausgestaltungen der Erfindung trotzdem möglich) . Die elektrische Maschine (z.B. Elektromotor) EM kann insbesondere als Netzdrossel bei einer einphasigen oder dreiphasigen Wechselstrom- (AC)-Ladung arbeiten, eine Gleichrichtung von einphasigem (AC2 über SW2) und auch (z.B. danach) dreiphasigem (AC1, AC2, AC3 über SW1, SW2, SW3) Wechselstrom AC kann über einen Inverter (z.B. einen Traktionsinverter) WR erfolgen. Für die Spannungslage des Fahrzeugbordnetzes FBN kann z.B. durchgehend ein hoher/höherer Wert von z.B. 800V gewählt werden (z.B. für die

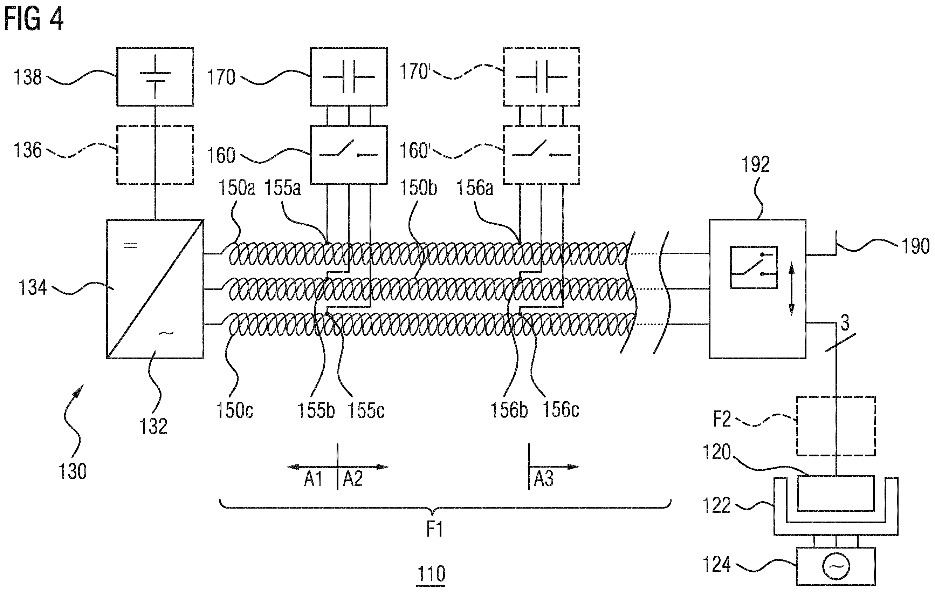

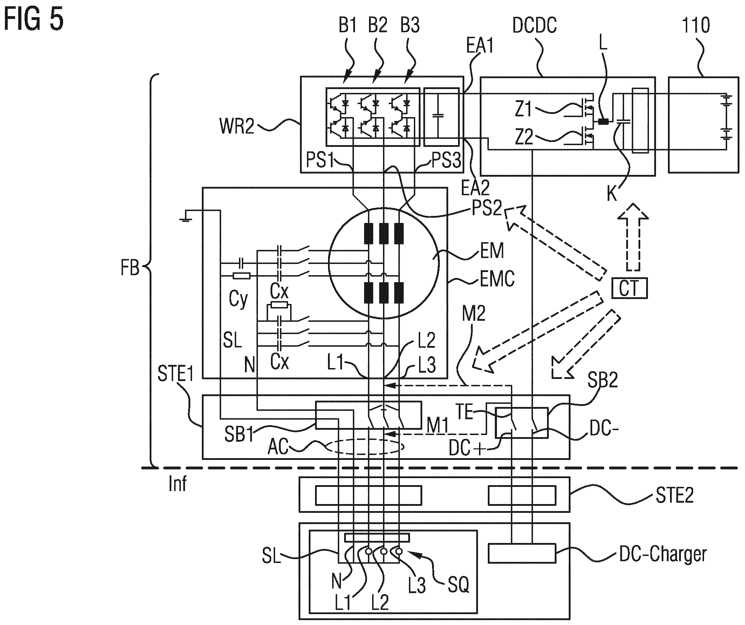

HV-Bordnetz-Komponentenelektrische Maschine EM (Elektromotor), den Inverter (WR) und den Energiespeicher ES (Akkumulator)). Es können (z.B. anstatt einer in Fig. 4, 5 beschriebenen DC-Booster Spannungsanpassung) beim Laden mit Wechselstrom (AC) und/oder beim Laden des Energiespeichers ES mit Gleichstrom DC z.B. nach Ausgestaltungen der Erfindung folgende zwei Maßnahmen implementiert werden:
Es kann ein Energiespeicher (z.B. HV-Akkumulator) ES im Fahrzeugbordnetz FBN (z.B. eines Hybrid-PlugIn /PlugIn-Elektrofahrzeugs) EV vorgesehen sein, dessen SOC-Spannungsband (SOC: State of Charge, oder etwa Status des Ladens) teilweise, insbesondere "größtenteils" (z.B. über die Hälfte) über dem Niveau der an ihn angelegten Spannung (gleichgerichteten Netzwechselspannung oder Gleichspannung) U1 und/oder U2 liegt.

Zweckmäßig sein kann, z.B. für eine Verwendung in China oder der EU oder Deutschland ein Energiespeicher (z.B. Akku) mit maximaler Batteriespannung und/oder Ladespannung 800V sein,
und mit einem zulässigen und/oder vorgesehenen und/oder SOC und/oder typischen Spannungsbereich von (z.B. vollständig oder auf 20% des Maximums) leer bis nach (z.B. vollständig oder auf 80% des Maximums) voll von: 500 bis 800V.

Zweckmäßig sein kann, z.B. für eine Verwendung in USA oder Japan ein Energiespeicher (z.B. Akku) mit maximaler Batteriespannung und/oder Ladespannung von 400V,
und mit einem zulässigen und/oder vorgesehenen und/oder SOC- und oder typischen Spannungsbereich von (z.B. vollständig oder auf 20% des Maximums) leer bis nach (z.B. vollständig oder auf 80% des Maximums) voll von: 230V bis 450V.

Wenn der Energiespeicher ES leer ist (also z.B. mit einem SOC und/oder Ladezustand unter einem Grenzwert von z.B. etwa 20%), erfolgt z.B. erst eine ein-phasige (durch Durchschalten von nur AC2 über die Schalteinrichtung SW2) langsame Wechselstrom-AC-Vorladung (z.B. in China/EU: mit min. 230V^{∗}1,42^{∗}1,1 ≈ 360V) bis die Batteriespannung U_Akku mindestens einer gleichgerichtete Netzwechselspannung U_Netz_AVR (von z.B. 400V^{∗}1,42^{∗}1,1 ≈ 600V) erreicht, die als zweite Spannung U2 ab dann angelegt werden soll für dann z.B. dreiphasiges Laden (durch Durchschalten von AC1 und AC2 und AC 3 über Schalteinrichtungen SW1 und SW2 und SW3).

Eine Ladesequenz nach einer Ausgestaltung der Erfindung kann z.B. folgende sein:
- Die Steuerung Ctrl wählt beim Beginn des Ladens des Energiespeichers ES durch entsprechendes Schalten der Schalteinrichtungen SW1, SW2, SW3, SW4; SP1, SP2,; (von denen SW1-SW4 hierbei AC-Netzverbindungsschalter sind) für eine langsame Energiespeicher(ES)-Vorladung die Konfiguration aus, bei welcher sich die geringste gleichgerichtete Netzwechselspannung als U1 am Energiespeicher ES (Batterie) ergibt.
   (Ginge man mit einem Inverter an das AC-Netz, bei welchem die Akku- bzw. DC-Link-Spannung niedriger ist als die gleichgerichtete Netzwechselspannung, könnte sich über die Rückwärts-Dioden der Inverter-Halbleiterschalter ein sehr hoher unkontrollierbarer Ladestrom ergeben, welcher einem Kurzschlussstrom gleichen kann und automatisch eine Schmelzsicherung aktivieren oder Bauteile angreifen könnte)
- Wenn dann der Energiespeicher ES ausreichend vorgeladen wurde, was (z.B. auch mit bekannten Kennlinien) feststellbar sein könnte aufgrund des Ladespannungs- und/oder Ladestrom-Verlaufs und/oder der Spannung U_Akku und/oder des Ladestroms in den Energiespeicher ES hinein etc.),
   z.B. weil der Energiespeicher ES das Spannungs-Niveau der kleinen oder insbesondere der großen gleichgerichteten Netzwechselspannung (also z.B. U2) erreicht hat, dann wird auf die schnelle Ladung (z.B. mit U2; und/oder: z.B. in EU/China: drei-phasig mit 400V, oder z.B. USA/Japan: ein-phasig mit 220V) umgeschaltet. Die Umschaltung findet z.B. durch die Schalteinrichtungen SW1-SW6 (also Netzverbindungs-Schalter) zwischen einem (z.B. an die Ladestation Lad angeschlossenen z.B. öffentlichen) Netz und den Phasenanschlüssen U2, V2, W2 der elektrischen Maschine EM (z.B. Elektromotor eines Kraftfahrzeugs) statt.

Nach Ausgestaltungen der Erfindung sind z.B. zwei Lade-Eingänge DC+, DC- des Gleichstrom-Übertragungsanschlusses DC nach extern und/oder zu einer Ladestation Lad für (zumindest auch) Gleichspannung DC über Schalteinrichtungen SW2, SW3 jeweils auf je eine (innere) Motorphase (V2, W2) der elektrischen Maschine (EM) schaltbar. Wenn ein Masseanschluss LV-Gnd von der Ladestation Lad über den Stecker Stk und eine Schalteinrichtung SW6 an die elektrische Maschine EM und/oder den Inverter WR und/oder den Energiespeicher ES oder Masse schaltbar oder verbunden ist, könnte auch das Schalten (SW2 oder SW3) eines der Lade-Eingänge DC+, DC- des Gleichstrom-Übertragungsanschlusses DC zum Laden ausreichen, evtl. zusätzlich zum Schalten (SW6) des Masseanschlusses LV-Gnd (der Masseanschluss könnte also dabei ggf. auch als einer der zwei Lade-Eingänge des Gleichstrom-Übertragungsanschlusses DC verwendet werden).

Z.B. nach Ausgestaltungen der Erfindung in Form eines Anschlusses einer Ladestation Lad an ein öffentliches Netz in den USA oder Japan kann der Energiespeicher ES erst relativ langsam mit z.B. mindestens 170V (110V^{∗}1,42^{∗}1,1 ≈ 170V) auf mindestens das Niveau der "großen" (also z.B. D2, die verglichen mit U1 groß ist) gleichgerichteten Netzwechselspannung von ca. 340V vorgeladen (220V^{∗}1, 42^{∗}1,1 ≈ 340V) werden (z.B. mit SW2 oder SW3). Dann werden die Lade-Schalter SW1-SW3 zwischen der elektrischen Maschine (Elektromotor) und dem (an z.B. Anschlüsse AC1 und/oder AC2 und/oder AC3 angeschlossenen) Wechselspannungsnetz AC auf die leistungsfähigere Konfiguration (z.B. in den USA oder /Japan von U1 = 110V einphasig auf U2 = 220V einphasig) umgeschaltet.

Z.B. kann nach weiteren Ausgestaltungen der Erfindung in Form eines Anschlusses einer Ladestation Lad an ein öffentliches Netz in China oder der EU oder Deutschland von 230V ein-phasig (zum Laden mit zunächst nur der Spannung U1) auf 400V drei-phasig (zum Laden mit dann der verglichen mit U1 höheren Spannung U2) umgestellt werden. Z.B. der Spannungsbereich von 800V-Akkus kann dabei z.B. zu einem deutlich größeren Teil über dem Niveau der gleichgerichteten Netzwechselspannung (U1 und/oder U2) liegen als es bei einem 400V Akku und dem US-/Japan-Netz der Fall wäre.

Gebrauchssicherheit kann gewährleistet sein trotz des Merkmals von Ausgestaltungen der Erfindung, dass eine Gleichspannungs-(DC)-Ladespannung auf ein eigentlich zum Wechselspannungs-(AC)-Betrieb vorgesehenes Betriebsmittel (wie z.B. die elektrische Maschine ES und/oder den Wechselrichter WR) gegeben wird. Die durch das Ladesystem und/oder CCS gewährleistete konstruktive Abdeckung des Wechselspannungs-(AC)-Ladeteils beim Gleichspannungs-(DC)-Laden bzw. des Gleichspannungs-(DC)-Ladeteils beim Wechselspannungs- (AC) -Laden kann z.B. eventuell mögliche elektrische Fehlerfälle insoweit vermeiden, dass evtl. gleichzeitig vorhandene Wechselspannungs-(AC)- und Gleichspannungs-(DC)-Infrastrukturanschlüsse so nicht gleichzeitig Spannung in das Fahrzeugbordnetz eines Fahrzeugs Spannung schalten würden, sondern sinnvollerweise nur einer der beiden, jedoch wären auch zusätzliche Schutzeinrichtungen wie eigene Trennschalter für Wechselspannungs-(AC)- und Gleichspannungs-(DC)-Infrastrukturanschlüsse im Fahrzeugbordnetz vorstellbar.

Über gemäß Ausgestaltungen der Erfindung zum Laden des Energiespeichers ES zeitlich nacheinander in zwei Stufen über Wicklungen der elektrischen Maschine EL zur Verfügung gestellte Spannungen können über einen dafür vorgesehenen DC-DC-Wandler (Bezugszeichen in Fig. 1 "DCDC_Wandler") auch einem weiteren Bordnetz eines Fahrzeugs zur Verfügung gestellt werden (z.B. einem weiteren Bordnetz mit 12V (ein Fahrzeugbordnetz und/oder ein Elektromotor EM an der HV-Batterie und diese können dagegen beim Fahren z.B. mit 48V betrieben werden).

## Patentansprüche

1. Fahrzeugbordnetz (FBN) mit
- einem Wechselrichter (WR),
- einem elektrischen Energiespeicher (ES),
- einer elektrischen Maschine (EM) und
- einem Wechselstrom-Übertragungsanschluss (AC),
wobei der Wechselrichter (WR) eine erste Seite (S1) und eine zweite Seite (S2) aufweist und eingerichtet ist, Leistung zwischen diesen Seiten (S1, S2) zu übertragen,
wobei auf der ersten Seite (S1) des Wechselrichters (WR) zwei Ausgangsanschlüsse (EA1, EA2) des Wechselrichters (WR) mit dem Energiespeicher (ES) verbunden oder verbindbar sind,
wobei auf der zweiten Seite (S2) des Wechselrichters (WR) mindestens zwei Phasenstromanschlüsse (PS1, PS2, PS3) des Wechselrichters (WR) mit der elektrischen Maschine (EM) verbunden oder verbindbar sind,
wobei durch eine von einer Steuerung (Ctrl) gesteuerte Schalteinrichtung (SW1, SW2, SW3, SW4; SP1, SP2; SW-Box) des Fahrzeugbordnetzes mindestens einer der Lade-Eingänge (N; AC1, AC2, AC3; DC+, DC-) des Fahrzeugbordnetzes (FBN) jeweils auf eine Wicklung (U2, V2, W2) der elektrischen Maschine (EM) schaltbar ist,
und wobei das Fahrzeugbordnetz (FBN) dazu ausgebildet ist (Ctrl; SW-Box), zunächst den elektrischen Energiespeicher (ES) mit einer ersten Spannung (U1) auf mindestens eine zum Laden mit einer zweiten Spannung (U2) ausreichende Spannung (U_Akku) zu laden (AC; DC),
und danach den elektrischen Energiespeicher (ES) mit der zweiten Spannung (U2) zu laden (AC; DC), welche zweite Spannung (U2) höher als die erste Spannung (U1) ist, **gekennzeichnet dadurch, dass** dazu von einer gesteuerten (Ctrl) Schalteinrichtung (SW1, SW2, SW3, SW4; SP1, SP2; SW-Box) nur ein Phasen-Anschluss (AC2, AC3) des Wechselstrom-Übertragungsanschlusses (AC) des Fahrzeugbordnetzes (FBN) über nur eine der Phasen (V2; W2) der elektrischen Maschine (EM) und über den Wechselrichter (WR) an den elektrischen Energiespeicher (ES) geschaltet wird, und dadurch dass das Fahrzeugbordnetz weiter (FBN) dazu ausgebildet ist, danach den elektrischen Energiespeicher (ES) mit der zweiten Spannung (U2) zu laden, mittels die Anschlüsse (AC1, AC2, AC3) des Wechselstrom-Übertragungsanschlusses (AC) des Fahrzeugbordnetzes (FBN) über drei Wicklungen bzw innere Motorphasen (U2, V2, W2) der elektrischen Maschine (EM) und über den Wechselrichter (WR) an den elektrischen Energiespeicher (ES) zu schalten (SW1, SW2, SW3), wobei die Steuerung (Ctrl) dazu ausgebildet ist,
automatisch anhand des Energiespeicher-Ladezustands (U_Akku) zu entscheiden, ob einphasig oder dreiphasig zu laden ist.

2. Fahrzeugbordnetz (FBN) nach Anspruch 1, mit
- einem Gleichstrom-Übertragungsanschluss (DC),
wobei durch eine gesteuerte (Ctrl) Schalteinrichtung (SW1, SW2, SW3, SW4; SP1, SP2, SW-Box) mindestens einer der Lade-Eingänge (AC2; AC3; N) des Wechselstrom-Übertragungsanschlusses (AC) zum Laden mit der ersten Spannung (U1) auf eine Wicklung bzw. innere Motorphase (U2, V2, W2) der elektrischen Maschine (EM) schaltbar ist,
und danach mindestens einer (DC+; DC-) der Gleichstrom-Lade-Eingänge (DC+, DC-) auf eine Wicklung bzw. innere Motorphase (U2, V2, W2) der elektrischen Maschine (EM) zum Laden mit der zweiten Spannung (U2) schaltbar ist.

3. Fahrzeugbordnetz nach einem der vorhergehenden Ansprüche, wobei das Fahrzeugbordnetz (FBN) dazu ausgebildet ist (CTRL), bei einem Laden des Energiespeichers (ES) mit Gleichspannung (DC) über mindestens einen Eingang (DC+, DC-) des Gleichstrom-Übertragungsanschlusses (DC) des Fahrzeugbordnetzes (FBN) jeden geschalteten (SW2, SW3) Eingang (DC+, DC-) nur über je eine Wicklung bzw. innere Motorphase (U2, V2, W2) der elektrischen Maschine (EM) auf den Energiespeicher (ES) zu schalten.

4. Fahrzeugbordnetz nach einem der vorhergehenden Ansprüche, wobei die Schalteinrichtung (SW1, SW2, SW3, SW4; SP1, SP2) Schalter (SW1, SW2, SW3) für mehrere Lade-Eingänge (AC1, A2, AC3) des Wechselstrom-Übertragungsanschlusses (AC) des Fahrzeugbordnetzes (FBN), insbesondere Lade-Eingänge (AC1, A2, AC3) für eine Ladeeinrichtung (Lad) für das Fahrzeugbordnetz (FBN), aufweist.

5. Fahrzeugbordnetz nach einem der vorhergehenden Ansprüche, wobei die Schalteinrichtung (SW1, SW2, SW3, SW4; SP1, SP2) einen oder mehrere Schalter (SW2, SW3) für je einen der Lade-Eingänge (DC+, DC-) des Gleichstrom-Übertragungsanschlusses (DC) des Fahrzeugbordnetzes (FBN), insbesondere zum Anschluss an eine Ladeeinrichtung (Lad) für das Fahrzeugbordnetz (FBN), aufweist, insbesondere zum Schalten dieser Lade-Eingänge (DC+, DC-) auf je eine Wicklung bzw. innere Motorphase (U2, V2, W2) der elektrischen Maschine (EM).

6. Fahrzeugbordnetz nach einem der vorhergehenden Ansprüche, wobei die Schalteinrichtung (SW1, SW2, SW3, SW4; SP1, SP2) mit der elektrischen Maschine (EM) verbundene Schalter (SW1, SW2, SW3, SW4; SP1, SP2) aufweist, insbesondere Schalter (SP1, SP2) für eine Stern-Dreiecksschaltung und/oder ein Kurzschließen von Phasen der elektrischen Maschine (EM) zum Umschalten von einem Traktionsbetrieb auf einen Ladebetrieb.

7. Fahrzeugbordnetz nach einem der vorhergehenden Ansprüche, wobei alle Schalter (SW1, SW2, SW3, SW4; SP1, SP2,;) der Schalteinrichtung (SW1, SW2, SW3, SW4; SP1, SP2,;), insbesondere Schalter (SP1, SP2) für eine Stern-Dreiecksschaltung und/oder Schalter (S1, S2, S3) für Lade-Eingänge (AC1, AC2, AC3; DC+, DC-), in einem gemeinsamen Gehäuse (SW-Box) und/oder Modul angeordnet sind,
insbesondere entweder zwischen der elektrischen Maschine (EM) und einem EMV-Filter (EMV-F) im Fahrzeugbordnetz (FBN) und/oder einem Stecker (Stk) des Fahrzeugbordnetzes (FBN) oder zwischen der elektrischen Maschine (EM) und dem Wechselrichter (WR).

8. Fahrzeugbordnetz nach einem der vorhergehenden Ansprüche, wobei eine Schalteinrichtung (SW4) zum Schalten eines N-Leiters (N) näher am Stecker (Stk) oder ferner vom Stecker (Stk) als eine zu ihr (SW4) serielle Induktivität (ID1) angeordnet ist.

9. Fahrzeugbordnetz nach einem der vorhergehenden Ansprüche, wobei eine Schalteinrichtung (SW1) für eine Phase (AC1) zwischen einer Schalteinrichtung (SW4) zum Schalten eines N-Leiters (N) und dem Stecker (Stk) geschaltet ist.

10. Fahrzeugbordnetz nach einem der vorhergehenden Ansprüche, wobei Schalteinrichtungen (SW2) und (SW3) für je einen der Lade-Eingänge (AC2; AC3; N) des Wechselstrom-Übertragungsanschlusses (AC) zwischen einer dazu (SW2, SW3) seriellen Induktivität (ID2, ID3) und dem Stecker (Stk) geschaltet sind.

11. Fahrzeugbordnetz nach einem der vorhergehenden Ansprüche, wobei in einem Stecker (Stk) des Fahrzeugbordnetzes (FBN) die Lade-Eingänge (AC1, AC2, AC3) für einen Wechselstrom-Übertragungsanschluss (AC) des Fahrzeugbordnetzes (FBN) und die Lade-Eingänge (DC+, DC-) für einen Gleichstrom-Übertragungsanschluss (DC) des Fahrzeugbordnetzes (FBN) angeordnet sind,
insbesondere in einem in eine Ladestation (Lad) einsteckbaren Stecker (Stk). (Fig. 6)

12. Fahrzeugbordnetz einem der vorhergehenden Ansprüche, wobei die Steuerung (Ctrl) dazu ausgebildet ist, beim Beginn des Ladens des Energiespeichers (ES) durch entsprechendes Schalten der Schalteinrichtungen (SW1, SW2, SW3, SW4; SP1, SP2) für eine langsame Energiespeicher-Vorladung die Konfiguration auszuwählen, bei welcher sich die geringste gleichgerichtete Netzwechselspannung am Energiespeicher (ES) ergibt, und ausgebildet ist, auf eine schnelle Ladung umzuschalten, bei der dreiphasig geladen wird, wenn der Energiespeicher (ES) ausreichend vorgeladen wurde.

13. Fahrzeugbordnetz nach einem der vorhergehenden Ansprüche, wobei die Steuerung (Ctrl) dazu ausgebildet ist,
automatisch anhand des Energiespeicher-Ladezustands (U_Akku) zu entscheiden, von einphasig auf dreiphasig umzuschalten.

14. Fahrzeugbordnetz nach einem der vorhergehenden Ansprüche, wobei der elektrischen Energiespeicher (ES) ein (SOC-) Spannungsband für die zulässige Ladespannung (U_Akku; U1; U2) des elektrischen Energiespeichers (ES) aufweist,
das (U_Akku) teilweise oder größtenteils über dem Niveau der kleineren (U1) und/oder der größeren (U2) zum Laden vorgesehenen gleichgerichteten Netzwechselspannung (U1; U2) beim Laden über den Wechselstrom-Übertragungsanschluss (AC) und/oder Gleichstrom-Übertragungsanschlusses (DC) des Fahrzeugbordnetzes liegt,
insbesondere ein Spannungsbereich von bei entladenem oder auf maximal 20% teilentladenem Energiespeicher (ES) von 230V oder 500V bis zu bei vollem oder zumindest 80% vollem Energiespeicher (ES) von 450V oder 800V, also von 230V bis 450V oder von 500V bis 800V.

15. Fahrzeugbordnetz nach einem der vorhergehenden Ansprüche, wobei wenn der elektrische Energiespeicher (ES) entladen ist, insbesondere auf einen relativen Grenzwerte von weniger als etwa 20% oder 25% des Maximums entladen ist,
der elektrische Energiespeicher (ES) erst mit der ersten Spannung (U1) und/oder ein-phasig über eine Phase (U2) der elektrischen Maschine (EM) und/oder langsam geladen wird,
insbesondere mit einer ersten Spannung (U1) die eine Wechselspannung (AC) von maximal einphasig 156V oder 360V (230V*1,42*1,1) ist und/oder bis die Spannung (U_Akku) am Energiespeicher (ES) größer als die gleichgerichtete (EM, TP) erste (U1) oder zweite (U2) Netzwechselspannung (U_Netz_AVR;U1; 400V*1,42*1,1 ≈ 600V) ist.

16. Fahrzeugbordnetz nach einem der vorhergehenden Ansprüche, wobei die erste Spannung (U1) am Energiespeicher (ES) 230V ist und die zweite Spannung (U2) am Energiespeicher (ES) 400V ist, oder
die erste Spannung (U1) am Energiespeicher (ES) 170V ist und die zweite Spannung (U2) am Energiespeicher (ES) 340V ist.

17. Fahrzeugbordnetz nach einem der vorhergehenden Ansprüche, wobei der Wechselstrom-Übertragungsanschluss (AC) zum Laden ein einphasiger Wechselstrom-Übertragungsanschluss (AC) und/oder ein dreiphasiger Drehstrom-Übertragungsanschluss ist.

18. Fahrzeugbordnetz nach einem der vorhergehenden Ansprüche, wobei eine Schalteinrichtung (SW1, SW2, SW3, SW4; SP1, SP2; SW-Box) jeweils entweder ein mechanischer Schalter, insbesondere Schütz, oder ein Halbleiterschalter, oder
ein Hybrider Schalter aus bestehend aus einem mechanischen Schalter und einem Halbleiterschalter.

19. Fahrzeugbordnetz nach einem der vorhergehenden Ansprüche, wobei über mindestens eine Schalteinrichtung (SW1, SW2, SW3) sowohl ein Wechselstrom-Übertragungsanschluss (AC1, AC2, AC, AC3) des Fahrzeugbordnetzes (FBN) als auch Gleichstrom-Übertragungsanschluss (DC+, DC-) schaltbar ist.

20. Fahrzeugbordnetz nach dem vorhergehenden Anspruch, wobei der Stecker eingerichtet ist, abzusichern, dass nur entweder über den Wechselstrom-Übertragungsanschluss (AC1, AC2, AC, AC3) oder über den Gleichstrom-Übertragungsanschluss (DC+, DC-) geladen wird.

21. Verfahren zum Laden eines elektrischen Energiespeichers (ES),
insbesondere mit einem Fahrzeugbordnetz (FBN) nach einem der vorhergehenden Ansprüche mit
- einem Wechselrichter (WR),
- einem elektrischen Energiespeicher (ES),
- einer elektrischen Maschine (EM) und
- einem Wechselstrom-Übertragungsanschluss (AC),
wobei der Wechselrichter (WR) eine erste Seite (S1) und eine zweite Seite (S2) aufweist und eingerichtet ist, Leistung zwischen diesen Seiten (S1, S2) zu übertragen,
wobei auf der ersten Seite (S1) des Wechselrichters (WR) zwei Ausgangsanschlüsse (EA1, EA2) des Wechselrichters (WR) mit dem Energiespeicher (ES) verbunden sind,
wobei auf der zweiten Seite (S2) des Wechselrichters (WR) mindestens zwei Phasenstromanschlüsse (PS1, PS2, PS3) des Wechselrichters (WR) mit der elektrischen Maschine (EM) verbunden sind,
wobei das Fahrzeugbordnetz (FBN) zunächst den elektrischen Energiespeicher (ES) mit einer ersten Spannung (U1) lädt, und danach den elektrischen Energiespeicher (ES) mit einer zweiten Spannung (U2) lädt, welche zweite Spannung (U2) höher als die erste Spannung (U1) ist **gekennzeichnet dadurch, dass** dazu von einer gesteuerten (Ctrl) Schalteinrichtung (SW1, SW2, SW3, SW4; SP1, SP2; SW-Box) nur ein Phasen-Anschluss (AC2, AC3) des Wechselstrom-Übertragungsanschlusses (AC) des Fahrzeugbordnetzes (FBN) über nur eine der Phasen (V2; W2) der elektrischen Maschine (EM) und über den Wechselrichter (WR) an den elektrischen Energiespeicher (ES) geschaltet wird,
und dadurch dass das Fahrzeugbordnetzdanach(FBN) danach den elektrischen Energiespeicher (ES) mit der zweiten Spannung (U2) lädt, mittels die Anschlüsse (AC1, AC2, AC3) des Wechselstrom-Übertragungsanschlusses (AC) des Fahrzeugbordnetzes (FBN) über drei Wicklungen bzw innere Motorphasen (U2, V2, W2) der elektrischen Maschine (EM) und über den Wechselrichter (WR) an den elektrischen Energiespeicher (ES) zu schalten (SW1, SW2, SW3), und eine Steuerung (Ctrl) automatisch anhand des Energiespeicher-Ladezustands (U_Akku) entscheidet, ob einphasig oder dreiphasig zu laden ist.

## Claims

1. Vehicle electrical system (FBN) having
- an inverter (WR),
- an electrical energy store (ES),
- an electrical machine (EM) and
- an AC transmission terminal (AC),
wherein the inverter (WR) has a first side (S1) and a second side (S2) and is configured to transmit power between these sides (S1, S2),
wherein two output terminals (EA1, EA2) of the inverter (WR) are connected or connectable to the energy store (ES) on the first side (S1) of the inverter (WR),
wherein at least two phase current terminals (PS1, PS2, PS3) of the inverter (WR) are connected or connectable to the electrical machine (EM) on the second side (S2) of the inverter (WR),
wherein at least one of the charging inputs (N; AC1, AC2, AC3; DC+, DC-) of the vehicle electrical system (FBN) is connectable to a respective winding (U2, V2, W2) of the electrical machine (EM) by a switching device (SW1, SW2, SW3, SW4; SP1, SP2; SW-Box) of the vehicle electrical system controlled by a controller (Ctrl),
and wherein the vehicle electrical system (FBN) is designed (Ctrl; SW-Box) to initially charge (AC; DC) the electrical energy store (ES) with a first voltage (U1) to at least one voltage (U_Akku) sufficient for charging with a second voltage (U2),
and then to charge (AC; DC) the electrical energy store (ES) with the second voltage (U2), which second voltage (U2) is higher than the first voltage (U1) **characterized in that** for this purpose only one phase terminal (AC2, AC3) of the AC transmission terminal (AC) of the vehicle electrical system (FBN) is connected to the electrical energy store (ES) via only one of the phases (V2; W2) of the electrical machine (EM) and via the inverter (WR) by a controlled (Ctrl) switching device (SW1, SW2, SW3, SW4; SP1, SP2; SW-Box), and the vehicle electrical system furthermore (FBN) is designed
to thereafter connect (SW1, SW2, SW3) by means of the terminals (AC1, AC2, AC3) of the AC transmission terminal (AC) of the vehicle electrical system (FBN) to the electrical energy store (ES) via three windings or inner motor phases (U2, V2, W2) of the electrical machine (EM) and via the inverter (WR), charge the electrical energy store (ES) with the second voltage (U2), wherein the controller (Ctrl) is designed to automatically take the energy store state of charge (U Akku) as a basis for deciding whether single-phase or three-phase charging is required.

2. Vehicle electrical system (FBN) according to Claim 1, having - a DC transmission terminal (DC),
wherein at least one of the charging inputs (AC2; AC3; N) of the AC transmission terminal (AC) is connectable to a winding or inner motor phase (U2, V2, W2) of the electrical machine (EM) by a controlled (Ctrl) switching device (SW1, SW2, SW3, SW4; SP1, SP2, SW-Box) to charge with the first voltage (U1),
and then at least one (DC+; DC-) of the DC charging inputs (DC+, DC-) is connectable to a winding or inner motor phase (U2, V2, W2) of the electrical machine (EM) to charge with the second voltage (U2) .

3. Vehicle electrical system according to either of the preceding claims,
wherein the vehicle electrical system (FBN) is designed (CTRL) so as, when the energy store (ES) is being charged with DC voltage (DC) via at least one input (DC+, DC-) of the DC transmission terminal (DC) of the vehicle electrical system (FBN), to connect each switched (SW2, SW3) input (DC+, DC-) to the energy store (ES) only via one winding or inner motor phase (U2, V2, W2) of the electrical machine (EM) each.

4. Vehicle electrical system according to one of the preceding claims,
wherein the switching device (SW1, SW2, SW3, SW4; SP1, SP2) has switches (SW1, SW2, SW3) for multiple charging inputs (AC1, A2, AC3) of the AC transmission terminal (AC) of the vehicle electrical system (FBN), in particular charging inputs (AC1, A2, AC3) for a charging device (Lad) for the vehicle electrical system (FBN).

5. Vehicle electrical system according to one of the preceding claims,
wherein the switching device (SW1, SW2, SW3, SW4; SP1, SP2) has one or more switches (SW2, SW3) for one each of the charging inputs (DC+, DC-) of the DC transmission terminal (DC) of the vehicle electrical system (FBN), in particular for connection to a charging device (Lad) for the vehicle electrical system (FBN),
in particular for connecting these charging inputs (DC+, DC-) to one winding or inner motor phase (U2, V2, W2) of the electrical machine (EM) each.

6. Vehicle electrical system according to one of the preceding claims,
wherein the switching device (SW1, SW2, SW3, SW4; SP1, SP2) has switches (SW1, SW2, SW3, SW4; SP1, SP2) connected to the electrical machine (EM), in particular switches (SP1, SP2) for a star delta connection and/or for shorting phases of the electrical machine (EM) to change over from a traction mode to a charging mode.

7. Vehicle electrical system according to one of the preceding claims,
wherein all the switches (SW1, SW2, SW3, SW4; SP1, SP2) of the switching device (SW1, SW2, SW3, SW4; SP1, SP2), in particular switches (SP1, SP2) for a star delta connection and/or switches (S1, S2, S3) for charging inputs (AC1, AC2, AC3; DC+, DC-),
are arranged in a common housing (SW-Box) and/or module,
in particular either between the electrical machine (EM) and an EMC filter (EMV-F) in the vehicle electrical system (FBN) and/or a connector (Stk) of the vehicle electrical system (FBN) or between the electrical machine (EM) and the inverter (WR).

8. Vehicle electrical system according to one of the preceding claims,
wherein a switching device (SW4) is arranged to connect an N conductor (N) closer to the connector (Stk) or further from the connector (Stk) than an inductance (ID1) in series with it (SW4).

9. Vehicle electrical system according to one of the preceding claims,
wherein a switching device (SW1) for one phase (AC1) is connected between a switching device (SW4) for connecting an N conductor (N) and the connector (Stk).

10. Vehicle electrical system according to one of the preceding claims,
wherein switching devices (SW2) and (SW3) for one each of the charging inputs (AC2; AC3; N) of the AC transmission terminal (AC) are connected between an inductance (ID2, ID3) in series therewith (SW2, SW3) and the connector (Stk).

11. Vehicle electrical system according to one of the preceding claims,
wherein the charging inputs (AC1, AC2, AC3) for an AC transmission terminal (AC) of the vehicle electrical system (FBN) and the charging inputs (DC+, DC-) for a DC transmission terminal (DC) of the vehicle electrical system (FBN) are arranged in a connector (Stk) of the vehicle electrical system (FBN),
in particular in a connector (Stk) pluggable into a charging station (Lad). (Fig. 6)

12. Vehicle electrical system according to one of the preceding claims,
wherein the controller (Ctrl) is designed so as, at the beginning of charging of the energy store (ES), to use appropriate switching of the switching devices (SW1, SW2, SW3, SW4; SP1, SP2) for a slow energy store pre-charge to select the configuration in which the lowest rectified system AC voltage is obtained on the energy store (ES), and is designed to change over to a fast charge, which involves three-phase charging being effected if the energy store (ES) has been adequately pre-charged.

13. Vehicle electrical system according to one of the preceding claims,
wherein the controller (Ctrl) is designed
to automatically take the energy store state of charge (U_Akku) as a basis for deciding to change over from single-phase to three-phase.

14. Vehicle electrical system according to one of the preceding claims,
wherein the electrical energy store (ES) has an (SOC) voltage band for the permissible charging voltage (U_Akku; U2) of the electrical energy store (ES),
which voltage band (U_Akku) is partially or mostly above the level of the lower (U1) and/or the higher (U2) rectified system AC voltage (U1; U2) provided for charging when charging via the AC transmission terminal (AC) and/or DC transmission terminal (DC) of the vehicle electrical system,
in particular a voltage range of from 230 V or 500 V, when the energy store (ES) is discharged or partially discharged to no more than 20%, to 450 V or 800 V, when the energy store (ES) is full or at least 80% full, that is to say from 230 V to 450 V or from 500 V to 800 V.

15. Vehicle electrical system according to one of the preceding claims,
wherein if the electrical energy store (ES) is discharged, in particular to a relative limit value of less than approximately 20% or 25% of the maximum,
the electrical energy store (ES) is first charged with the first voltage (U1) and/or using a single phase via one phase (U2) of the electrical machine (EM) and/or slowly,
in particular with a first voltage (U1), which is an AC voltage (AC) of no more than 156 V or 360 V (230V^{∗}1.42^{∗}1.1) single-phase and/or until the voltage (U_Akku) on the energy store (ES) is higher than the rectified (EM, TP) first (U1) or second (U2) system AC voltage (U_Netz_AVR; 400V^{∗}1.42^{∗}1.1 ≈ 600V).

16. Vehicle electrical system according to one of the preceding claims,
wherein the first voltage (U1) on the energy store (ES) is 230 V and the second voltage (U2) on the energy store (ES) is 400 V, or
the first voltage (U1) on the energy store (ES) is 170 V and the second voltage (U2) on the energy store (ES) is 340 V.

17. Vehicle electrical system according to one of the preceding claims,
wherein the AC transmission terminal (AC) for charging is a single-phase AC transmission terminal (AC) and/or a three-phase transmission terminal.

18. Vehicle electrical system according to one of the preceding claims,
wherein a switching device (SW1, SW2, SW3, SW4; SP1, SP2; SW-Box) is in each case either a mechanical switch, in particular contactor, or a semiconductor switch, or
a hybrid switch consisting of a mechanical switch and a semiconductor switch.

19. Vehicle electrical system according to one of the preceding claims,
wherein both an AC transmission terminal (AC1, AC2, AC, AC3) of the vehicle electrical system (FBN) and a DC transmission terminal (DC+, DC-) are connectable via at least one switching device (SW1, SW2, SW3).

20. Vehicle electrical system according to the preceding claim, wherein the connector is designed to ensure that charging is effected only either via the AC transmission terminal (AC1, AC2, AC, AC3) or via the DC transmission terminal (DC+, DC-).

21. Method for charging an electrical energy store (ES),
in particular using a vehicle electrical system (FBN) according to one of the preceding claims having
- an inverter (WR),
- an electrical energy store (ES),
- an electrical machine (EM) and
- an AC transmission terminal (AC),
wherein the inverter (WR) has a first side (S1) and a second side (S2) and is configured to transmit power between these sides (S1, S2),
wherein two output terminals (EA1, EA2) of the inverter (WR) are connected to the energy store (ES) on the first side (S1) of the inverter (WR),
wherein at least two phase current terminals (PS1, PS2, PS3) of the inverter (WR) are connected to the electrical machine (EM) on the second side (S2) of the inverter (WR),
wherein the vehicle electrical system (FBN) initially charges the electrical energy store (ES) with a first voltage (U1), and then charges the electrical energy store (ES) with a second voltage (U2), which second voltage (U2) is higher than the first voltage (U1), **characterized in that** for this purpose only one phase terminal (AC2, AC3) of the AC transmission terminal (AC) of the vehicle electrical system (FBN) is connected to the electrical energy store (ES) via only one of the phases (V2; W2) of the electrical machine (EM) and via the inverter (WR) by a controlled (Ctrl) switching device (SW1, SW2, SW3, SW4; SP1, SP2; SW-Box), and the vehicle electrical system thereafter (FBN)thereafter charges the electrical energy store (ES) with the second voltage(U2), to connect (SW1, SW2, SW3) by means of the terminals (AC1, AC2, AC3) of the AC transmission terminal (AC) of the vehicle electrical system (FBN) to the electrical energy store (ES) via three windings or inner motor phases (U2, V2, W2) of the electrical machine (EM) and via the inverter (WR), and a controller (Ctrl) automatically takes the energy store state of charge (U_Akku) as a basis for deciding whether single-phase or three-phase charging is required.

## Revendications

1. Réseau de bord de véhicule (FBN), comprenant
- un onduleur (WR),
- un accumulateur d'énergie (ES) électrique,
- une machine électrique (EM) et
- un raccordement de transmission de courant alternatif (AC),
l'onduleur (WR) possédant un premier côté (S1) et un deuxième côté (S2) et étant conçu pour transmettre de la puissance entre ces côtés (S1, S2),
deux raccordements de sortie (EA1, EA2) de l'onduleur (WR) sur le premier côté (S1) de l'onduleur (WR) étant reliés ou pouvant être reliés à l'accumulateur d'énergie (ES),
au moins deux raccordements de courant de phase (PS1, PS2, PS3) de l'onduleur (WR) sur le deuxième côté (S2) de l'onduleur (WR) étant reliés ou pouvant être reliés à la machine électrique (EM), au moins l'une des entrées de charge (N ; AC1, AC2, AC3 ; DC+, DC-) du réseau de bord de véhicule (FBN) pouvant respectivement être commutée sur un enroulement (U2, V2, W2) de la machine électrique (EM) par un dispositif de commutation (SW1, SW2, SW3, SW4 ; SP1, SP2, SW-Box) du réseau de bord de véhicule commandé par une commande (Ctrl),
et le réseau de bord de véhicule (FBN) étant configuré (Ctrl ; SW-Box) pour charger (AC ; DC) tout d'abord l'accumulateur d'énergie (ES) électrique avec une première tension (U1) à une tension suffisante (U_Akku) pour charger avec une deuxième tension (U2),
et ensuite charger (AC ; DC) l'accumulateur d'énergie (ES) électrique avec la deuxième tension (U2), ladite deuxième tension (U2) étant supérieure à la première tension (U1), **caractérisé en ce que** pour ce faire, une seule borne de phase (AC2, AC3) du raccordement de transmission de courant alternatif (AC) du réseau de bord de véhicule (FBN) est commutée sur l'accumulateur d'énergie (ES) électrique par le biais d'une seule des phases (V2 ; W2) de la machine électrique (EM) et par le biais de l'onduleur (WR) par un dispositif de commutation (SW1, SW2, SW3, SW4 ; SP1, SP2, SW-Box) commandé (Ctrl), et **en ce que** le réseau de bord de véhicule (FBN) est en outre configuré pour ensuite charger l'accumulateur d'énergie (ES) électrique avec la deuxième tension (U2), commuter (SW1, SW2, SW3) sur l'accumulateur d'énergie (ES) électrique au moyen des bornes (AC1, AC2, AC3) du raccordement de transmission de courant alternatif (AC) du réseau de bord de véhicule (FBN) par le biais de trois enroulements ou phases de moteur internes (U2, V2, W2) de la machine électrique (EM) et par le biais de l'onduleur (WR), la commande (Ctrl) étant configurée pour décider automatiquement, à l'aide de l'état de charge de l'accumulateur d'énergie (U_Akku), si la charge doit être effectuée en monophasé ou triphasé.

2. Réseau de bord de véhicule (FBN) selon la revendication 1, comprenant
- un raccordement de transmission de courant continu (DC),
au moins l'une des entrées de charge (AC2 ; AC3 ; N) du raccordement de transmission de courant alternatif (AC) pouvant être commutée sur un enroulement ou une phase de moteur interne (U2, V2, W2) de la machine électrique (EM) par un dispositif de commutation (SW1, SW2, SW3, SW4 ; SP1, SP2, SW-Box) commandé par une commande (Ctrl) en vue d'effectuer la charge avec la première tension (U1),
et ensuite au moins l'une (DC+ ; DC-) des entrées de charge à courant continu (DC+ ; DC-) pouvant être commutée sur un enroulement ou une phase de moteur interne (U2, V2, W2) de la machine électrique (EM) en vue d'effectuer la charge avec la deuxième tension (U2).

3. Réseau de bord de véhicule selon l'une des revendications précédentes, le réseau de bord de véhicule (FBN) étant configuré (CTRL) pour, lors d'une charge de l'accumulateur d'énergie (ES) avec une tension continue (DC) par le biais d'au moins une entrée (DC+ ; DC-) du raccordement de transmission de courant continu (DC), commuter chaque entrée (DC+ ; DC-) commutée (SW2, SW3) sur l'accumulateur d'énergie (ES) électrique par le biais respectivement d'un seul enroulement ou phase de moteur interne (U2, V2, W2) de la machine électrique (EM).

4. Réseau de bord de véhicule selon l'une des revendications précédentes, le dispositif de commutation (SW1, SW2, SW3, SW4 ; SP1, SP2) possédant des commutateurs (SW1, SW2, SW3) pour plusieurs entrées de charge (AC1, A2, AC3) du raccordement de transmission de courant alternatif (AC) du réseau de bord de véhicule (FBN), notamment des entrées de charge (AC1, A2, AC3) pour un dispositif de charge (Lad) pour le réseau de bord de véhicule (FBN).

5. Réseau de bord de véhicule selon l'une des revendications précédentes, le dispositif de commutation (SW1, SW2, SW3, SW4 ; SP1, SP2) possédant des commutateurs (SW2, SW3) pour respectivement une entrée de charge (DC+ ; DC-) du raccordement de transmission de courant continu (DC) du réseau de bord de véhicule (FBN), notamment destinés au raccordement à un dispositif de charge (Lad) pour le réseau de bord de véhicule (FBN), notamment destinés à commuter cette entrée de charge (DC+ ; DC-) respectivement sur un enroulement ou une phase de moteur interne (U2, V2, W2) de la machine électrique (EM).

6. Réseau de bord de véhicule selon l'une des revendications précédentes, le dispositif de commutation (SW1, SW2, SW3, SW4 ; SP1, SP2) possédant des commutateurs (SW1, SW2, SW3, SM4 ; SP1, SP2) reliés à la machine électrique (EM), notamment des commutateurs (SP1, SP2) pour un branchement en étoile-triangle et/ou un court-circuitage de phases de la machine électrique (EM) pour une permutation d'un régime de traction vers un régime de charge.

7. Réseau de bord de véhicule selon l'une des revendications précédentes, tous les commutateurs (SW1, SW2, SW3 ; SP1, SP2 ;) du dispositif de commutation (SW1, SW2, SW3, SW4 ; SP1, SP2 ;), notamment les commutateurs (SP1, SP2) pour un branchement en étoile-triangle et/ou les commutateurs (S1, S2, S3) pour les entrées de charge (AC1, AC2, AC3 ; DC+, DC-) étant disposés dans un boîtier (SW-Box) et/ou un module commun,
notamment soit entre la machine électrique (EM) et un filtre CEM (EMV-F) dans le réseau de bord de véhicule (FBN) et/ou une fiche (Stk) du réseau de bord de véhicule (FBN) ou entre la machine électrique (EM) et l'onduleur (WR).

8. Réseau de bord de véhicule selon l'une des revendications précédentes, un dispositif de commutation (SW4) destiné à commuter un conducteur de neutre (N) étant disposé plus près de la fiche (Stk) ou plus loin de la fiche (Stk) qu'une inductance (ID1) en série avec celui-ci (SW4).

9. Réseau de bord de véhicule selon l'une des revendications précédentes, un dispositif de commutation (SW1) pour une phase (AC1) étant branché entre un dispositif de commutation (SW4) destiné à commuter un conducteur de neutre (N) et la fiche (Stk).

10. Réseau de bord de véhicule selon l'une des revendications précédentes, les dispositifs de commutation (SW2) et (SW3) pour respectivement l'une des entrées de charge (AC2, AC3 ; N) du raccordement de transmission de courant alternatif (AC) étant branchés entre une inductance (ID2, ID3) en série avec ceux-ci (SW2, SW3) et la fiche (Stk).

11. Réseau de bord de véhicule selon l'une des revendications précédentes, les entrées de charge (AC1, AC2, AC3) pour un raccordement de transmission de courant alternatif (AC) du réseau de bord de véhicule (FBN) et les entrées de charge (DC+ ; DC-) du raccordement de transmission de courant continu (DC) du réseau de bord de véhicule (FBN) étant disposées dans une fiche (Stk) du réseau de bord de véhicule (FBN),
notamment dans une fiche (Stk) enfichable dans une station de charge (Lad). (Fig. 6)

12. Réseau de bord de véhicule selon l'une des revendications précédentes, la commande (Ctrl) étant configurée pour, au début de la charge de l'accumulateur d'énergie (ES), par une commutation en conséquence des dispositifs de commutation (SW1, SW2, SW3, SW4 ; SP1, SP2), pour une précharge lente de l'accumulateur d'énergie, sélectionner la configuration avec laquelle la tension alternative de réseau redressée la plus faible est obtenue au niveau de l'accumulateur d'énergie (ES), et étant configurée pour permuter sur une charge rapide, lors de laquelle la charge est effectuée en triphasée, lorsque l'accumulateur d'énergie (ES) a suffisamment été préchargé.

13. Réseau de bord de véhicule selon l'une des revendications précédentes, la commande (Ctrl) étant configurée pour décider automatiquement, à l'aide de l'état de charge de l'accumulateur d'énergie (U_Akku), de permuter du monophasé au triphasé.

14. Réseau de bord de véhicule selon l'une des revendications précédentes, l'accumulateur d'énergie (ES) électrique possédant une bande de tension (SOC-) pour la tension de charge admissible (U_Akku ; U1 ; U2) de l'accumulateur d'énergie (ES) électrique, la (U_Akku) se trouvant en partie ou en majeure partie au-dessus du niveau de la plus petite (U1) et/ou de la plus grande (U2) tension alternative de réseau redressée (U1 ; U2) prévue pour la charge lors de la charge par le biais du raccordement de transmission de courant alternatif (AC) et/ou du raccordement de transmission de courant continu (DC) du réseau de bord de véhicule,
notamment une plage de tension de 230 V ou de 500 V, lorsque l'accumulateur d'énergie (ES) est déchargé ou partiellement chargé au maximum à 20 %, à 450 V ou 800 V, lorsque l'accumulateur d'énergie (ES) est entièrement chargé ou au moins à 80 % de sa pleine charge, c'est-à-dire de 230 V à 450 V ou de 500 V à 800 V.

15. Réseau de bord de véhicule selon l'une des revendications précédentes, avec lequel, lorsque l'accumulateur d'énergie (ES) électrique est déchargé, notamment déchargé à une valeur limite relative inférieure à environ 20 % ou 25 % du maximum, l'accumulateur d'énergie (ES) électrique est tout d'abord chargé avec la première tension (U1) et/ou en monophasé par le biais d'une phase (U2) de la machine électrique (EM) et/ou lentement, notamment avec une première tension (U1) qui est une tension alternative (AC) monophasée maximale de 156 V ou de 360 V (230 V^{∗}1,42^{∗}1,1) et/ou jusqu'à une tension (U_Akku) aux bornes de l'accumulateur d'énergie (ES) qui est supérieure à la première (U1) ou à la deuxième (U2) tension alternative de réseau (U_Netz_AVR ; U1 ; 400 V^{∗}1,42^{∗}1,1 ∼ 600 V) redressée (EM, TP).

16. Réseau de bord de véhicule selon l'une des revendications précédentes, la première tension (U1) aux bornes de l'accumulateur d'énergie (ES) étant de 230 V et la deuxième tension (U2) aux bornes de l'accumulateur d'énergie (ES) étant de 400 V,
ou
la première tension (U1) aux bornes de l'accumulateur d'énergie (ES) étant de 170 V et la deuxième tension (U2) aux bornes de l'accumulateur d'énergie (ES) étant de 340 V.

17. Réseau de bord de véhicule selon l'une des revendications précédentes, le raccordement de transmission de courant alternatif (AC) destiné à la charge étant un raccordement de transmission de courant alternatif (AC) monophasé et/ou un raccordement de transmission de courant triphasé.

18. Réseau de bord de véhicule selon l'une des revendications précédentes, un dispositif de commutation (SW1, SW2, SW3, SW4 ; SP1, SP2 ; SW-Box) respectivement soit un commutateur mécanique, notamment un contacteur, soit un commutateur semiconducteur, soit un commutateur hybride, composé d'un commutateur mécanique et d'un commutateur semiconducteur.

19. Réseau de bord de véhicule selon l'une des revendications précédentes, un raccordement de transmission de courant alternatif (AC1, AC2, AC, AC3) du réseau de bord de véhicule (FBN) ainsi qu'un raccordement de transmission de courant continu (DC+ ; DC-) étant commutables par le biais d'au moins un dispositif de commutation (SW1, SW2, SW3).

20. Réseau de bord de véhicule selon l'une des revendications précédentes, la fiche étant conçue pour assurer que la charge s'effectue uniquement soit par le biais du raccordement de transmission de courant alternatif (AC1, AC2, AC, AC3), soit par le biais du raccordement de transmission de courant continu (DC+ ; DC-) .

21. Procédé pour charger un accumulateur d'énergie (ES) électrique,
notamment avec un réseau de bord de véhicule (FBN) selon l'une des revendications précédentes, comprenant
- un onduleur (WR),
- un accumulateur d'énergie (ES) électrique,
- une machine électrique (EM) et
- un raccordement de transmission de courant alternatif (AC),
l'onduleur (WR) possédant un premier côté (S1) et un deuxième côté (S2) et étant conçu pour transmettre de la puissance entre ces côtés (S1, S2),
deux raccordements de sortie (EA1, EA2) de l'onduleur (WR) sur le premier côté (S1) de l'onduleur (WR) étant reliés à l'accumulateur d'énergie (ES),
au moins deux raccordements de courant de phase (PS1, PS2, PS3) de l'onduleur (WR) sur le deuxième côté (S2) de l'onduleur (WR) étant reliés à la machine électrique (EM),
le réseau de bord de véhicule (FBN) chargeant tout d'abord l'accumulateur d'énergie (ES) électrique avec une première tension (U1) et ensuite l'accumulateur d'énergie (ES) électrique avec une deuxième tension (U2), ladite deuxième tension (U2) étant supérieure à la première tension (U1),
**caractérisé en ce que** pour ce faire, une seule borne de phase (AC2, AC3) du raccordement de transmission de courant alternatif (AC) du réseau de bord de véhicule (FBN) est commutée sur l'accumulateur d'énergie (ES) électrique par le biais d'une seule des phases (V2 ; W2) de la machine électrique (EM) et par le biais de l'onduleur (WR) par un dispositif de commutation (SW1, SW2, SW3, SW4 ; SP1, SP2, SW-Box) commandé (Ctrl), et **en ce que** le réseau de bord de véhicule (FBN) charge ensuite l'accumulateur d'énergie (ES) électrique avec la deuxième tension (U2), en étant commuté (SW1, SW2, SW3) sur l'accumulateur d'énergie (ES) électrique au moyen des bornes (AC1, AC2, AC3) du raccordement de transmission de courant alternatif (AC) du réseau de bord de véhicule (FBN) par le biais de trois enroulements ou phases de moteur internes (U2, V2, W2) de la machine électrique (EM) et par le biais de l'onduleur (WR), et une commande (Ctrl) décidant automatiquement, à l'aide de l'état de charge de l'accumulateur d'énergie (U_Akku), si la charge doit être effectuée en monophasé ou triphasé.
